# EUROPEAN PATENT APPLICATION

(11) **EP 4 835 432 A1**
(43) Date of publication of application: **04.11.2026**
(21) Application number: 26175699.3
(22) Date of filing: 30.04.2026
(51) Int. Cl.: G01M 17/007, G01M 15/04

(54) **METHOD FOR DETECTING THE MECHANICAL POWER GENERATED BY AN ENGINE OF A VEHICLE**

(30) Priority: 30.04.2025 IT 202500009771
(71) Applicant: Turrin Elettronica S.r.l., 35129 Padova (PD) (IT); Tanturri, Stefano, 00079 Rocca Priora (RM) (IT)
(72) Inventor: TANTURRI, Stefano, 00079 Rocca Priora (IT); TURRIN, Luca, 35129 Padova (PD) (IT)
(74) Representative: Pelanda, Paolo

(57) **Abstract**

A method for detecting the mechanical power generated by an engine of a vehicle comprises a step a) of preparation of at least one roller suited to come into contact with a respective driving wheel of the vehicle, each roller being suited to selectively rotate around its central axis as a result of the rotation of the vehicle wheels; a step b) of preparation of braking means suited to selectively apply a braking torque to the roller; a step c) of positioning the wheels of the vehicle in contact with said at least one roller; a step d) of driving the engine of the vehicle to promote the rotation of the wheels placed on the roller and the consequent acceleration of the latter, the driving being suited to bring the engine to a predetermined operating mode; a step e) of releasing the engine of the vehicle so as to remove the rotational torque imparted by the engine to the wheels; a step f) of actuating the braking means so as to promote the application of a braking torque having a predetermined value to the roller; a step g) of forced deceleration of the roller; a step h) of detecting the angular velocity associated with the roller at the first reference time; a step i) of calculating the ratio between the constant associated with the dissipative resistances and the moment of inertia of the assembly comprising at least the vehicle and the roller; a step j) of deactivating the braking means; a step k) of repeating step d) and step e); a step I) of natural deceleration of the roller for a second reference time; a step m) of detecting the angular velocity associated with the roller at the second reference time; a step n) of calculating the moment of inertia of the assembly comprising at least the vehicle and said at least one roller; a step o) of calculating the dissipative resistances of the assembly from the value of said moment of inertia of the assembly calculated in said step m); a step p) of calculating the mechanical power delivered by the vehicle engine to the wheels

## Description

### Field of application of the invention

The present invention is positioned in the field of equipment for motor vehicles and relates to a method for detecting the mechanical power associated with the engine of a vehicle.

Furthermore, the present invention also relates to an apparatus for detecting the mechanical power associated with the engine of a vehicle.

### State of the art

In the technical field of equipment for measuring the technical characteristics associated with a vehicle, it has long been known to use roller test benches intended to measure the power actually generated by the engine (whether fully internal combustion or hybrid, i.e. provided with an internal combustion engine assisted by one or more electric motors).

Measuring power in internal combustion engines constitutes a very important step in the analysis of a vehicle, since this detection is essential when it is desired to optimize the performance of the vehicle itself and, at the same time, to demonstrate its compliance with environmental regulations.

The purpose of these tests is often to compare the results of the power of the vehicle actually measured (for example by means of a roller test bench) with the power specifications indicated on the vehicle's registration document.

In modern internal combustion engines (whether petrol or diesel powered), the delivery of power is precisely regulated by means of advanced electronic systems intended to control the mechanical torque applied to the engine shaft.

For example, in petrol-powered internal combustion engines, these electronic control systems make it possible to regulate the opening of the throttle valve.

In diesel-powered engines, on the other hand, the electronic control systems are able to directly regulate the injection of fuel into the combustion chamber.

Whatever the type of internal combustion engine (petrol or diesel), the electronic control systems make it possible to regulate the quantity of fuel and the volume of air introduced into the combustion chamber.

The regulation of both these factors proves to be decisive in maximizing the efficiency associated with the engine, thereby regulating the quantity of pollutant substances produced as a result of combustion (chiefly fumes and particulates), so as to keep the level of emissions within the limits set by the regulations in force.

Electronic control systems therefore influence the results of power tests carried out on an internal combustion engine, since their main purpose is to keep the efficiency of the engine within a predetermined range of parameters that makes it possible to comply with the environmental regulations associated with polluting emissions.

The close operative connection between the mechanical part of the vehicle (including the internal combustion engine) and the electronic control systems highlights the complexity encountered when it is desired to measure the power associated with the engine.

Apparatuses designed to detect the power of an internal combustion engine (generally referred to as test benches) typically comprise rollers that are set in rotation by the wheels of the vehicle.

These roller test benches are mainly divided into two types: the first category, defined as *inertial,* and the second category, defined as *braked.*

The inertial test bench bases the power measurement on the moment of inertia associated with the rollers. To do this, this type of bench applies to the rollers a resistance based exclusively on the weight and dimensions of the rollers themselves.

This type of instrument is suited to performing dynamic tests on the vehicle, although a non-negligible drawback of inertial-type benches lies in the reduced duration of a test, since obtaining reliable results regarding the power delivered by the internal combustion engine requires keeping the vehicle on the rollers for relatively short times, and they are affected by reduced resistance to the traction imparted by the engine.

The braked-type test bench, on the other hand, carries out a more precise and detailed control over the conditions in which the measurement is performed, since it involves the use of electromagnetic brakes associated with the rollers and suitably actuated by an electronic control unit to vary the load imposed on the rollers themselves, and consequently on the internal combustion engine.

The approach followed by braked-type benches makes it possible to simulate more realistic driving conditions than those reproduced by inertial-type benches and more closely reflects the operation of the electronic control unit associated with the engine, while at the same time offering greater flexibility with respect to the delivery actually associated with the engine's performance.

Furthermore, both types of test bench make it possible to carry out measurements over the whole operating range of the engine, a feature that is crucial for modern engines (often equipped with turbocharging); however, the inertial bench presents loads that are too low to be able to perform a reliable measurement, whereas the braked bench generates higher loads that are optimal for the measurement being carried out.

However, both types of roller test bench described above (inertial or braked) suffer from a number of significant drawbacks.

Firstly, these benches are affected by systematic measurement errors that do not allow the power associated with the internal combustion engine of a vehicle to be measured with precision.

In particular, the measurement carried out by means of these roller test benches is affected by the influence of vehicle parts other than the engine (for example the transmission); these components dissipate part of the energy generated by the engine, but at present it is not possible to determine this value.

Furthermore, each vehicle has its own value of dissipation of the energy generated by the engine, and roller test benches of the type described above are not able to detect the specificity associated with each vehicle.

Current roller test benches for determining the power of an internal combustion engine therefore do not allow the actual power generated by the engine to be isolated from the losses caused by the inertia of the transmission and from the overall dissipative resistances of the vehicle that are generated when the wheels are set in rotation.

### Summary of the invention

The present invention is intended to overcome the drawbacks mentioned above by providing a method for determining the power associated with the engine of a vehicle that is particularly effective and high-performing.

In particular, the main object of the present invention is to provide a method for determining the power associated with the engine of a vehicle capable of taking into account not only the actual mechanical power developed by the engine, but also the losses and resistances generated by the parts of the vehicle involved when the wheels are set in rotation.

A further object of the present invention is to provide a method for determining the power associated with the engine of a vehicle that makes it possible to isolate/discern the actual power generated by the engine from the energy losses associated with the inertia of the transmission and the overall resistances of the vehicle, these losses being generated when the wheels are set in rotation on the rollers.

A further object of the present invention is to provide a method for determining the power associated with the engine of a vehicle that makes it possible to measure the mechanical power actually developed by the engine in a particularly accurate and precise manner.

A further object of the present invention is to provide a method for determining the power associated with the engine of a vehicle that makes it possible to carry out a complete test on the vehicle in significantly reduced times and with particularly simple (low-complexity) measurement procedures.

A further object of the present invention is to provide a method for determining the power associated with the engine of a vehicle that makes it possible to reproduce, in a particularly precise manner, the physical phenomena associated with the vehicle when the engine delivers mechanical power to the moving parts.

Not least among the objects of the present invention is to provide a method for determining the power associated with the engine of a vehicle capable of providing precise and reliable results that are, at the same time, consistent and repeatable over time.

These objects are achieved by a method for determining the power associated with the engine of a vehicle according to claim 1.

### Brief description of the drawings

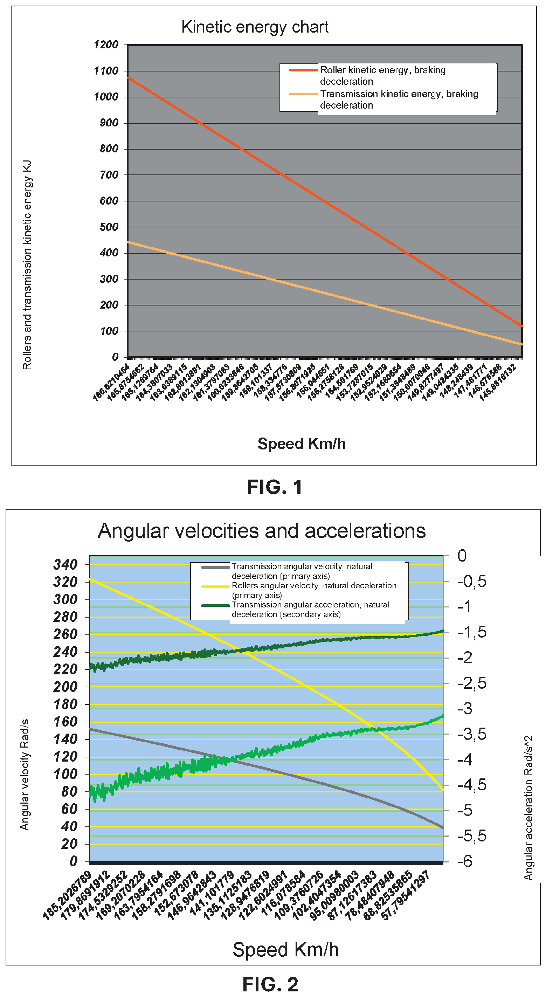

The advantages and characteristics of the present invention will become clear from the following detailed description of some preferred, but non-limiting, embodiments of a method for determining the power associated with the engine of a vehicle, with particular reference to the following drawings:
- from **Figure 1** to **Figure 9** graphs are illustrated relating to the application of particular steps of the method forming the subject of the present invention, applied to a piece of equipment for detecting the power associated with the engine of a vehicle used as a tester.

### Detailed description of the invention

The present invention relates to a method for determining the power associated with the engine of a vehicle.

In particular, the method described herein may be applied to determine the mechanical power generated by an engine of any type, whether an internal combustion, hybrid or fully electric engine. Furthermore, the vehicle may also be of any type, for example a car, a motor vehicle, a heavy vehicle or an agricultural vehicle.

As will be better indicated in the course of the present description, the method forming the subject of the present invention is based on the consideration that the components used to carry out the measurement on a vehicle (typically a test bench) and the vehicle itself initially represent two systems that are unknown with respect to one another.

In order to carry out effective measurements, i.e. capable of determining the power actually associated with the vehicle's engine, it is necessary for the apparatus used to carry out such measurements to detect the characteristics associated with the vehicle being tested in depth.

This in-depth detection of the characteristics associated with the vehicle by the measuring apparatus is manifested through the induction, on the vehicle, of certain specific phenomena.

Furthermore, when the vehicle undergoing measurement interacts with the equipment used to carry out the measurement of the power associated with the engine, a series of parameters is generated, from a physical/mathematical point of view, which can also influence the measurement but which, nevertheless, remain constant each time the same vehicle is subjected to a measurement with this specific test bench.

However, when the same vehicle undergoes a measurement with different equipment, the interaction that such vehicle generates with the latter generates new parameters intrinsic to the complex vehicle+equipment system, which will lead to a different power result being determined for the engine.

This intrinsic variability provides an explanation of the fact that, for the same vehicle, a measurement carried out on different test benches gives rise to different results as regards the power determined for the engine.

Suitably, in carrying out the present method, the ratio a of two factors is first of all taken into consideration, namely the kinetic energy of the transmission associated with the vehicle and the kinetic energy associated with the equipment used to carry out the detection of the engine power (typically a roller test bench).

This ratio **α** takes into account both the moments of inertia and the specific angular velocities associated with the vehicle and with the equipment
Therefore, the ratio a defines an index of the mutual interaction between the kinetic energies associated with the two systems (the equipment and the vehicle). This ratio **α** proves to be particularly significant in the analysis of the entire energy phenomenon, since its definition makes it possible to quantify how much the kinetic energy associated with the vehicle's transmission affects the total kinetic energy of the system (made up of equipment + vehicle) during the acceleration and deceleration phases.

It is then possible to define a second parameter **β** suited to representing the mathematical relationship linking the total moment of inertia of the system (equipment + vehicle) to the dissipative resistances of the same system (equipment + vehicle).

The ratio **β** has, in the numerator, the constant characterizing the dissipative resistances of the entire equipment+vehicle system and, in the denominator, the total moment of inertia of that system.

The physical phenomenon associated with the ratio **β** manifests itself on a daily basis when driving a vehicle, for example when constant pressure is applied to the brake while the vehicle is moving.

At first, the slowing down of the vehicle is moderate, but this deceleration increases over time as the speed decreases, if the force on the pedal remains unchanged.

Indeed, while the braking torque remains constant, the braking power (obtained as the product of the torque and the angular velocity of the wheels) is at its maximum at the start and progressively decreases as this angular velocity decreases.

This variation in the intensity of the deceleration, despite the constancy of the applied braking force, represents a physical manifestation of the ratio **β** between the inertia of the vehicle and the dissipative resistances.

In carrying out the present method, account is also taken of a further parameter, namely the ratio **γ**, which is obtained between the moment of inertia of the vehicle's transmission in the numerator and the moment of inertia of the measuring equipment in the denominator. Each vehicle has its own characteristic value of moment of inertia associated with the transmission, whereas the inertia of the test bench remains substantially constant over time.

Furthermore, the present method also takes into account the parameter **ζ**, correlated to the ratio **β**, and suited to providing information associated with the overall efficiency of the vehicle's transmission with respect to the specific equipment used to carry out the detection of the engine power.

The parameter **ζ** is likewise generated by the mutual interaction that forms between the vehicle and the equipment used to carry out the detection, since this parameter depends on the specific configuration of such equipment.

For example, from a dynamic point of view, the behaviour of the transmission will be different depending on whether the equipment used to carry out the detection is a single-roller or a double-roller test bench (assuming that both have the same kinetic energy at a given rotation speed, i.e. that the masses of the bench develop exactly the same moment of inertia in both cases).

In particular, in the double-roller test bench, the presence of two points of contact gives rise to an increase in energy consumption per unit time compared with the single-roller bench, which has a single point of contact; in this case, therefore, the dissipative torque associated with the double-roller bench is higher than the dissipative torque associated with the single-roller bench.

From a mathematical point of view, the ratio **ζ** defines a link between the variation in the kinetic energy of the system (vehicle+equipment) and the mechanical work produced by the resistive torque associated with the entire vehicle+equipment system.

Furthermore, the trend of the curve associated with the ratio **β** and the trend of the curve associated with the parameter **ζ** reflect the close correlation between the physical phenomena that they represent.

Consequently, the parameter **ζ** can be treated as a parameter characteristic of, and distinctive for, the equipment.

Suitably, the present method makes it possible to detect the mechanical power generated by an engine of a vehicle. Such a vehicle is provided, in addition to the engine, also with a transmission and with at least one pair of driving wheels operatively connected to that transmission.

Therefore, the vehicle's transmission has:
- its own moment of inertia;
- intrinsic mechanical resistances.

In addition to the four fundamental ratios described above, the proposed method introduces two further characteristic parameters that complete the characterization of the integrated bench-vehicle system.

Firstly, the ratio η (eta) represents the relationship between the mass of the equipment's rollers and their diameter. From a mathematical point of view: $η = m_roller / d_roller ,$ where m_roller is the mass of the rollers and d_roller is their diameter.

The ratio η classifies the design quality associated with the rollers: the radius of a roller determines the angular velocity (and a given peripheral speed), while the mass is directly proportional to the inertia, determining the energy storage capacity of the roller.

A further parameter that characterizes the design quality of the equipment (typically a test bench with rollers) is the radius of gyration of the system, defined by the ratio κ between the total moment of inertia of the bench and its mass. From a mathematical point of view, this parameter is calculated as follows: $K = \sqrt{\frac{l}{m}}$

Suitably, the parameter κ has a unit of measurement in metres or centimetres and represents how effectively the mass of the system is distributed with respect to the axis of rotation. A high radius of gyration indicates an optimal design, in which even with limited masses a significant moment of inertia is obtained thanks to the optimal distribution of the equipment's components. The parameter κ makes it possible to objectively distinguish high-quality equipment, highlighting that which invests in the actual mass of the rotating system (the latter being an essential element for ensuring an accurate simulation of road inertia and a correct measurement of the mechanical power).

This parameter allows calculation systems to predict, as a function of angular velocity and with precision, how much kinetic energy will actually be brought into play by the bench alone during the test, making it possible to calculate in advance the optimal braking torque to be applied for an efficient "cognitive symbiosis".

The ratio ε (epsilon) quantifies the specific energy efficiency of the system in relation to the apparent translational mass.

This ratio establishes the correlation between the total kinetic energy of the system and the capacity of this energy to produce useful work.

From a mathematical point of view $ε = E_useful / E_total ⋅ m_at ,$ where E_useful is the energy converted into useful work, E_total is the total kinetic energy of the system, and m_at is the apparent translational mass.

The ratio ε (epsilon) makes it possible to precisely characterize the dynamic efficiency of the entire system (made up of rollers + vehicle) under real operating conditions, completing the analytical picture necessary for a rigorous determination of the mechanical power generated by the engine.

Suitably, the method proposed hereinafter is distinguished by its ability to determine, with scientific precision, the mechanical power generated by an engine or propulsion unit, whatever its nature (internal combustion, electric or hybrid).

The approach is based on the controlled induction of specific physical phenomena that make it possible to fully characterize the dynamic system constituted by the vehicle and the apparatus or equipment. This characterization makes it possible to overcome the fundamental limitation of traditional methods, namely the impossibility of precisely determining the moment of inertia of the transmission and of quantifying the dissipative resistances specific to the vehicle. Only through exact knowledge of these parameters is it possible to carry out a rigorous energy balance that fully satisfies the principles of Newtonian dynamics.

In the most essential embodiment, the method forming the subject of the present invention comprises the following operating steps:
a) preparation of at least one roller suited to come into contact with a respective driving wheel of the vehicle, each roller being suited to selectively rotate around its central axis as a result of the rotation of the vehicle wheels;
b) preparation of braking means suited to selectively (on command) apply a braking torque (or braking couple) to each roller;
c) positioning of the wheels of the vehicle in contact with the at least one roller;
d) driving of the engine of the vehicle so as to promote the rotation of the wheels placed on the rollers and the consequent acceleration of the latter, such driving being suited to bring the engine to a predetermined rotation speed in order to impart to the wheels and to the at least one roller respective reference angular rotation speeds;
e) release of the engine (lifting off the accelerator) of the vehicle so as to remove the rotational torque imparted by the engine to the wheels;
f) actuation of the braking means so as to promote the application of a braking torque having a predetermined value to the at least one roller;
g) forced deceleration of the at least one roller; such forced deceleration remaining applied for a first predetermined time;
h) detection of the angular velocity associated with the at least one roller at the first reference time;
i) calculation of the ratio between the constant associated with the dissipative resistances of the assembly comprising at least the vehicle and the at least one roller and the moment of inertia of the assembly comprising at least the vehicle and said at least one roller; such ratio being calculated from the value of the angular velocity associated with the rollers in said step e) and in said step h);
j) deactivation of the braking means
k) further execution of said step d) and of said step e);
l) natural deceleration of the at least one roller; such natural deceleration remaining applied for a second predetermined reference time;
m) detection of the angular velocity associated with said at least one roller at said second reference time;
n) calculation of the moment of inertia of the assembly comprising, at least, the vehicle and the at least one roller, such moment of inertia being calculated from the value of the angular rotation speed associated with the at least one roller in step d), from the value of the angular rotation speed associated with the at least one roller in step m), and from the value of the ratio calculated in step i);
o) calculation of the dissipative resistances of the assembly comprising, at least, the vehicle and the at least one roller, such dissipative resistances being calculated from the value of the moment of inertia of the assembly calculated in step m);
p) calculation of the mechanical power delivered by the engine, such power being calculated as a function of the value of the moment of inertia calculated in step n) and the value of the dissipative resistances calculated in step o).

In the context of the present invention, the expressions "braking torque" and "braking couple" may be used as synonyms, since both oppose the rotation of the rollers prepared in step **a).**

These steps are described in greater detail in the remainder of the present description.

### Step a)

This step provides for the preparation of at least one roller suited to come into contact with a respective driving wheel of the vehicle.

In particular, each roller is fixed to a shaft so as to selectively rotate around its central axis as a result of the rotation of the vehicle wheels.

Suitably, in step a) it will be possible to prepare a complex piece of equipment suited to incorporating at least one roller intended to come into contact with a respective wheel of the vehicle so as to be set in rotation by the latter.

This equipment may preferably be a test bench provided with a supporting frame, suited to bear the weight of the vehicle and allow the mounting of one or more rollers intended to come into contact with the wheels of the vehicle.

Suitably, the test bench may be of the "single-roller" type, i.e. providing a single roller for each wheel of the vehicle, intended to come into contact with that wheel.

Alternatively, the test bench may be of the "double-roller" type, i.e. providing a pair of rollers, transversely offset from one another, for each wheel of the vehicle, so that each of them comes into contact with that wheel.

Therefore, a "single-roller" type test bench has a number of rollers equal to the number of wheels with which the vehicle is equipped, whereas a "double-roller" type test bench has a number of rollers double the number of wheels with which the vehicle is equipped.

Furthermore, the supporting frame associated with the test bench may have a platform fitted with a ramp suited to allow the vehicle to be positioned thereon, so as to bring the wheels of the latter into contact with the rollers.

In step **a)** of the method, a test bench provided with rollers that are longitudinally movable (i.e. along the lengthwise direction of the vehicle) may be prepared.

For example, the rollers intended to come into contact with the front wheels or with the rear wheels of the vehicle may undergo limited longitudinal displacements so as to adapt their position as a function of the wheelbase of the vehicle.

Each roller may have predetermined dimensions; for example, the diameter of the roller may be comprised between 25 cm and 80 cm, while its length may be comprised between 60 cm and 100 cm.

The plurality of rollers prepared in step **a),** and generally mounted in the test bench, may have substantially equal dimensions to one another.

In an alternative version, during step **a)** it will be possible to prepare one or more rollers having different dimensions (for example the diameter and/or the length) with respect to the other rollers prepared in the same step.

Furthermore, the mass of each roller may be comprised between 120 kg and 500 kg.

Also in this case, the rollers prepared in step **a)** may all have the same mass, or masses different from one another.

Suitably, during the execution of step a) it will also be possible to detect or measure the optimal operating temperature of all the components of the system (rollers, bearings, transmission, engine, tyres).

The determination of these temperatures may be obtained by means of a test cycle during which the wheels of the vehicle are placed on the rollers and cause them to rotate at a relatively high speed, also bringing all the components to thermal equilibrium.

### Step b)

in step **b)** of the method, the preparation is provided of braking means suited to selectively apply a braking torque to at least one roller prepared in step **a).**

Preferably, the braking means may be configured to apply a braking torque to all the rollers intended to come into contact with the driving wheels of the vehicle.

Alternatively, the braking means may be configured to promote the selective application of a braking torque to all the rollers prepared in step **a),** whether intended to come into contact with the driving wheels of the vehicle or with the non-driving wheels.

Suitably, the braking means may be operatively connected to the central shaft of each roller so as to apply the braking torque thereto in a selective manner.

For example, the braking means may consist of one or more electromagnetic brakes mounted close to the roller and acting on the central shaft thereof.

The braking torque applied by the braking means to the rollers may be substantially constant over time, or may be variable, depending on the circumstances, between a predetermined minimum value and a predetermined maximum value.

### Step c)

This step provides for the positioning of the vehicle above the rollers so as to promote contact of the wheels with such rollers.

In the event that, during the execution of step **a),** a test bench has been prepared, the operator who is to carry out the detection will move the vehicle in order to bring it onto the platform, with the front wheels and the two rear wheels in contact with the respective rollers.

Furthermore, if the test bench is designed to vary the distance separating the front rollers from the rear rollers, the operator will, prior to step **c),** carry out a setting of the final position of such rollers so as to comply with the wheelbase of the vehicle's wheels, so as to promote contact of all the rollers with the latter.

### Step d)

When the wheels of the vehicle are placed above the rollers and in contact with the latter, it is possible to carry out step **d)** of the method.

In particular, during this step, the engine of the vehicle is driven so as to promote the rotation of the wheels placed on the rollers and the consequent acceleration of the latter.

In other words, the vehicle is set in motion so as to start the engine and promote the rotation of the wheels by engaging one or more gears associated with the vehicle's gearbox.

Suitably, during the execution of step **d)** the engine is brought to a predetermined operating mode so as to impart to the wheels a corresponding predetermined speed.

In practice, the operator will act on the accelerator of the vehicle so as to increase the engine speed until a predetermined wheel rotation speed is reached, corresponding to a precise linear cruising speed value indicated on the speedometer.

For example, the operator may act on the accelerator so as to bring the vehicle to a hypothetical cruising speed comprised between 130 km/h and 150 km/h.

However, the operating mode to which the engine is brought during the execution of step d) may substantially correspond to the rated operating mode indicated in the official technical documents issued for that vehicle (for example the vehicle registration document or other similar documents).

As explained in the preceding steps, the rotation of the wheels at a predetermined speed results in the consequent rotation of the rollers at a rotation speed of their own, which is likewise predetermined.

The rotation speed of the rollers about their own axis of rotation will generally be greater than the speed at which the wheels of the vehicle rotate, since the rollers have a smaller diameter than the latter.

Furthermore, during the execution of step d) it will be possible to detect the angular rotation speed associated with the rollers when the engine is brought to the predetermined operating mode.

### Step e)

During the execution of step **e)** the release of the engine of the vehicle is promoted so as to remove the rotational torque imparted by that engine to the wheels.

In other words, in carrying out this step the operator removes his/her foot from the accelerator so as to cut off the supply of power to the vehicle's engine.

It is important to point out that, following removal of the foot from the accelerator and the consequent release of the engine, the operator does not perform any further actions and, in particular, does not act on the vehicle's brake pedal.

### Step f)

Suitably, the method provides for a step **f)** of actuating the braking means in order to promote the application, on the rollers, of a braking torque having a predetermined value.

The value of the braking torque (or of the braking couple, the two terms being synonymous) applied to the rollers by the braking means may generally be comprised between 100 Nm and 400 Nm.

### Step g)

Following step f), therefore, a step g) takes place during which the rollers undergo a forced (i.e. non-natural) deceleration, owing to the fact that the braking torque imparted by the braking means acts on them.

Therefore, during the execution of step g) the rollers undergo a deceleration starting from the maximum angular velocity that they have at the moment when the engine is brought to the predetermined operating mode.

Suitably, the forced-deceleration step g) of the rollers may remain in effect for a first predetermined reference time.

In this case, therefore, the actuation of the braking means promoted during the execution of step f) will be active for at least a duration corresponding to the first predetermined time.

The first reference time may be comprised between 15 s and 30 s.

### Step h)

The method provides for a step **h)** of detecting the angular velocity associated with the rollers at the first reference time.

The purpose of this step, therefore, is to determine the angular velocity of the rollers at a precise instant in time (the first reference time) when they are in a condition of forced deceleration, starting from a maximum angular rotation speed imparted to such rollers by the wheels when the engine, in step **d),** has been brought to a predetermined operating mode.

Suitably, during step h) a curve over time of the angular velocity associated with the rollers is detected, while a braking torque acts on them.

### Step i)

Following step **h),** a step **i)** is provided for calculating the ratio **β** between:
- In the numerator: the constant associated with the dissipative resistances of the assembly comprising at least the vehicle and the rollers (vehicle + rollers);
- In the denominator: the moment of inertia associated with the assembly comprising at least the vehicle and the rollers (vehicle + rollers).

This ratio **β** is calculated from the value of the velocity associated with the rollers in step **d)** and in step **h)**.

Suitably, the ratio **β** may be obtained as follows: $β = \frac{k}{I} = \frac{1}{t 1} \left(\frac{1}{ω}-\frac{1}{{ω}_{0}}\right)$ in which:
**k** is the constant associated with the dissipative resistances of the assembly comprising at least the vehicle and said at least one roller.
I is the moment of inertia of the assembly comprising at least the vehicle and said at least one roller;
t₁ is the first predetermined time;
ω and ω₀ are the angular velocities associated with the roller respectively in step **d)** and in step **h)**.

In particular, ω is the angular velocity of the roller at the moment tₓ at which such velocity is measured, while ω₀ is the angular velocity of the roller at the detection instant preceding the one considered at a given moment (if the sampling instant tₓ is being considered, ω₀ refers to the angular velocity of the rollers at time tₓ₋₁).

Consequently, the values of ω and w₀ correspond to the angular velocities sampled over time.

Furthermore, considering that the angular velocity of the roller varies over time, the parameter β likewise represents a curve, the trend of which is in turn variable over time.

### Step j)

During step j), the deactivation of the braking means and the consequent release of the rollers is provided.

### Step k)

Step **k)** of the method provides for a further execution of steps **d)** and **e)** described above.

In essence, after carrying out a forced-deceleration step of the rollers in order to detect their angular velocity at the first reference time, the method provides for a further investigation session.

This further investigation session involves a further driving of the engine of the vehicle in order to bring it to the same operating mode used previously, when step **d)** was carried out for the first time.

Consequently, the angular velocity associated with the rollers during this further investigation session will also be substantially the same as that detected during the first execution of step **d).**

Following the execution of a further step **d)** also step **e)** will be carried out again, namely the release of the engine so as to remove the rotational torque imparted by that engine to the wheels.

### Step I)

The execution of step **e)** results in the occurrence of step **l**), namely a step during which the natural deceleration of the rollers is generated.

The term natural deceleration refers to the deceleration phenomenon applied to the rollers, caused solely by the sum of the following mechanical resistances:
- mechanical resistances involving the vehicle's transmission;
- friction between the wheels and the rollers;
- mechanical resistances associated with the rollers;

In other words, during step **l)** the deceleration of the rollers is caused solely by the resistances present in the assembly comprising the rollers (possibly mounted on the test bench) and the vehicle, since no braking torques imparted by the operator act on the wheels of the latter.

Therefore, during the natural deceleration that occurs in step **I)** the operator is not expected to act on the vehicle's brake pedal.

Suitably, the natural-deceleration step of the rollers may have a predetermined duration. In particular, the rollers may decelerate naturally for a second predetermined reference time.

The second reference time may, for example, be comprised between 15 s and 30 s.

According to a first embodiment of the method, the first reference time and the second reference time may be substantially equal to each other.

In an alternative embodiment of the present method, on the other hand, the first predetermined time and the second predetermined time may be different from each other.

### Step m)

The method provides for a step **m)** of detecting the angular velocity associated with the rollers at the second reference time.

The purpose of this step, therefore, is to determine the angular velocity of the rollers at a precise instant in time (the second reference time) when they are in a condition of forced deceleration (braking torque applied), starting from a maximum angular rotation speed imparted to such rollers by the wheels when the engine, in step **d),** has been brought to a predetermined operating mode.

The angular velocity detected in step **m)** of natural deceleration is substantially a curve that varies over time.

### Possible repetition of steps k) - m)

Suitably, steps **k)** to **m)** may be repeated recursively for a predetermined number of times before proceeding to the execution of the calculation step **n)** described hereinafter.

For example, steps **k)** to **m)** may be carried out a total of two times in order to detect a pair of angular velocities associated with the rollers at the second reference time, while a braking torque acts on them.

The repetition of steps **k)** to **k)** makes it possible to obtain several values of the angular velocity associated with the rollers when the vehicle is subjected to an investigation session that involves the application of a braking torque to the rollers.

By repeating steps **k)** - **m)** a predetermined number of times, it is possible to obtain a particularly precise final value of the rotation angular velocity of the rollers in step **m)**, since this velocity is detected on several occasions on which the same phenomena occur.

Consequently, the angular velocity associated with the rollers that will be used in the subsequent step **n)** of the method (described hereinafter) may be obtained by calculating the average value of the angular velocities obtained at each iteration of the block of steps **k)** - **m)**.

### Step n)

The present method also comprises a step **n)** of calculating the moment of inertia of the assembly comprising at least the vehicle and the plurality of rollers.

This moment of inertia can be calculated from these known factors:
- The value of the angular rotation speed associated with the rollers detected in step **d)**;
- The value of the angular rotation speed associated with the rollers detected in step **m)**;
- the value of the ratio **β** calculated in step **i)**.

However, in the event that steps **l)** to **m)** have been carried out recursively for a predetermined number of times, the calculation of the moment of inertia of the assembly comprising at least the vehicle and the plurality of rollers may be carried out from these known factors:
- The value of the angular rotation speed associated with the rollers detected in step **d)**;
- The value of the angular rotation speed calculated as the average value of the rotation speeds detected at each iteration of step **m)**;
- the value of the ratio **β** calculated in step **i)**.

Preferably, the calculation of the moment of inertia of the assembly comprising at least the vehicle and the rollers may be calculated as follows: $arctan \left(\sqrt{\frac{k}{{τ}_{0}}}\right) - arctan \left({ω}_{o}\sqrt{\frac{k}{{τ}_{o}}}\right) = \frac{t \sqrt{{kτ}_{o}}}{I}$
which, by carrying out the substitution k = βI, can be rewritten as follows: $arctan \left(\sqrt{\frac{βI}{{τ}_{0}}}\right) - arctan \left({ω}_{o}\sqrt{\frac{βI}{{τ}_{o}}}\right) = \frac{t \sqrt{{βIτ}_{o}}}{I}$
in which:
   k is the constant associated with the dissipative resistances of the assembly comprising at least the vehicle and said at least one roller;
   I is the moment of inertia of the assembly comprising at least the vehicle and said at least one roller;
   τₒ is the value of the braking torque generated by the braking means and applied to the rollers in said step j).

Suitably, I, the moment of inertia of the assembly comprising at least the vehicle and said at least one roller, represents a constant**.** In particular, the moment of inertia I can be expressed as the sum of two constants: I_{bench}, which represents the moment of inertia associated with the rollers, and I_{vehicle}, which represents the moment of inertia associated with the vehicle.

Consequently: ${I}_{bench} = {I}_{rollers} + {I}_{vehicle}$

### Step o)

Suitably, following step **n)** the method provides for the execution of a step **o)** during which the value **k** of the dissipative resistances of the assembly comprising at least the vehicle and the plurality of rollers is calculated.

The value of the dissipative resistances can be calculated from the value of the moment of inertia of the same assembly (vehicle + plurality of rollers) calculated in step **m).**

Typically, the value **k** of the dissipative resistances can be calculated as follows: $k = βI$

### Step p)

Suitably, the method provides for the calculation of the mechanical power delivered by the vehicle's engine to the wheels.

This power is calculated, in step **p),** as a function of the value of the moment of inertia / calculated in step **n)** and the value of the dissipative resistances *k* calculated in step n).

Suitably, the calculation of the power associated with the engine will be better clarified hereinafter by means of an example.

### Further steps

The present method may also comprise a step **q)** of preparation of sensor means associated with the rollers.

These sensor means may be suited to detect the rotation time of each roller when the wheels are set in motion by the vehicle's engine (and consequently the rollers are also set in rotation).

Furthermore, a step **r)** may also be provided for the preparation of an electronic processing unit operatively associated with the braking means and the sensor means.

Obviously, the electronic processing unit may be configured to calculate the braking torque to be applied to the rollers and to actuate the braking means so as to actually apply to such rollers the value of the braking torque just calculated during the execution of step **f).**

Furthermore, the electronic processing unit may be the physical device suited to implementing the method described above as regards:
- the calculation of the angular velocity associated with the rollers in steps **h)** and **m)** (by receiving, from the sensor means, a signal containing information on the rotation time of each roller);
- The calculation of the ratio **β** between the constant associated with the dissipative resistances of the assembly comprising at least the vehicle and the rollers, and the moment of inertia of the assembly comprising at least the vehicle and the rollers;
- The calculation of the moment of inertia **I** of the assembly comprising at least the vehicle and the rollers;
- the calculation of the dissipative resistances **k** of the assembly comprising at least the vehicle and the rollers;
- the calculation of the mechanical power actually delivered by the vehicle's engine to the wheels.

### Graphs shown in the Figures

A description is given below of the graphs illustrated in Figures 1 - 9, obtained following the application of the method described above to a test vehicle, in order to detect the power associated with the engine with which the latter is equipped.

In particular, **Figure 1** illustrates one of the fundamental concepts of the "cognitive symbiosis" existing between the equipment and the vehicle, namely how the kinetic energy is distributed between the equipment and the vehicle's transmission. The significant difference between the two curves confirms what is stated in the method as regards the fact that the kinetic energy of the equipment is substantially greater than that of the transmission. The decreasing trend of both curves during natural deceleration shows how the energy is progressively dissipated as the speed decreases.

**Figure 2** is particularly significant, since it illustrates both the angular velocities (left-hand axis) and the angular accelerations (right-hand axis) during the natural-deceleration step. The transmission associated with the vehicle undergoes a more rapid deceleration than the rollers, providing evidence of the different inertias associated with these two systems. The acceleration curves show complementary trends that reveal the non-linear nature of the dissipative resistances, confirming the need for a "cognitive symbiosis" type of approach in order to fully characterize the behaviour of the dynamic system.

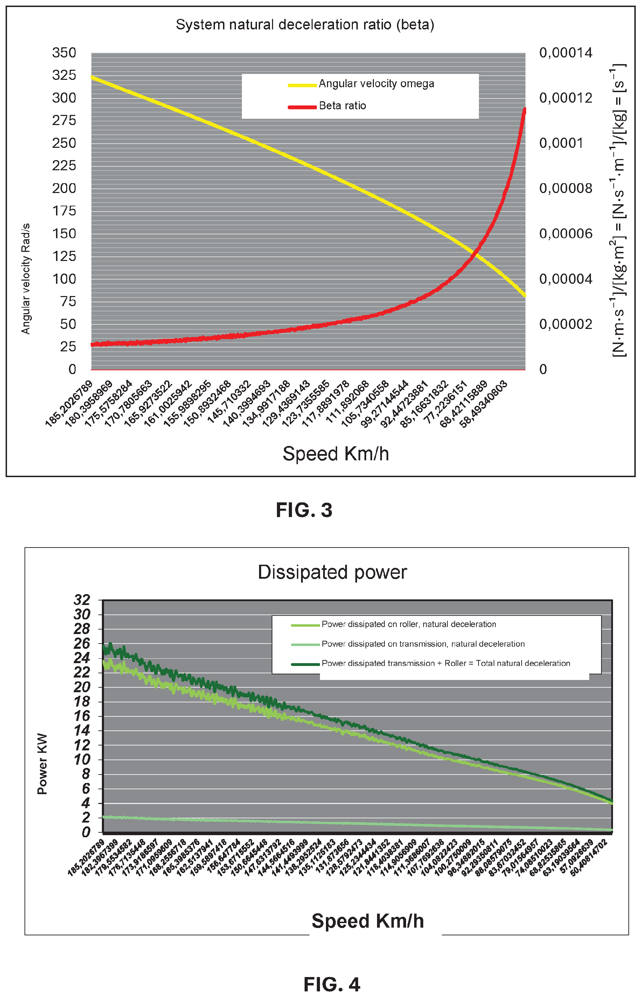

In **Figure 3** the parameter β is shown as a function of the speed, also showing how this parameter increases significantly at low speeds. This non-linear behaviour of the ratio β confirms what is described above regarding the variation in the intensity of the deceleration, even though the resistive forces are substantially constant. The graph empirically demonstrates that the dissipative resistances have a proportionally greater effect at low speeds.

**Figure 4** illustrates how the power dissipated during the natural-deceleration step is distributed between the roller, the vehicle's transmission, and the overall system obtained from both. It can be seen that most of the dissipation occurs at the rollers, but the contribution of the transmission is nevertheless significant and not negligible. This graph supports what is described above as regards discerning the actual power generated by the vehicle's engine from the energy losses associated with the inertia of the transmission.

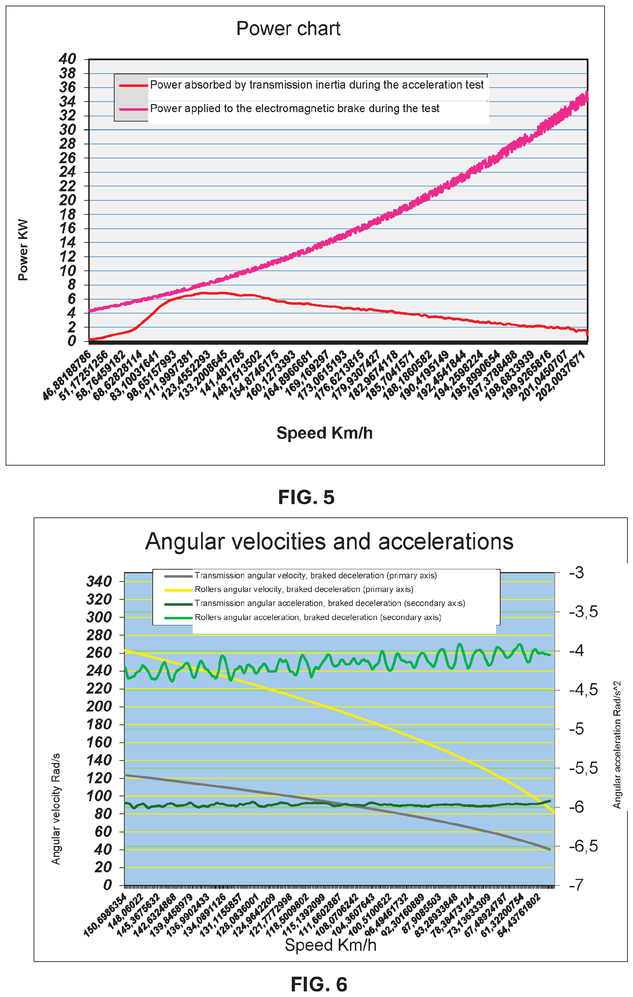

In **Figure 5** a comparison is illustrated between the power absorbed by the inertia of the transmission during acceleration and the power applied to the electromagnetic brake during the test. The increasing trend of the braking power (linked to the braking torque applied to the roller) as the speed increases confirms the correct application of the constant torque, while the curve of the transmission's inertia reveals how variable and significant this component is in the overall energy balance.

**Figure 6** illustrates the dynamics that occur during the forced-deceleration step of the rollers, when a braking torque is applied to them. It can be observed that the angular acceleration of the rollers remains substantially constant, confirming the application of a constant braking torque, as provided for in step **f)** of the method. The difference between the behaviour of the transmission and that of the rollers is even more pronounced than during natural deceleration.

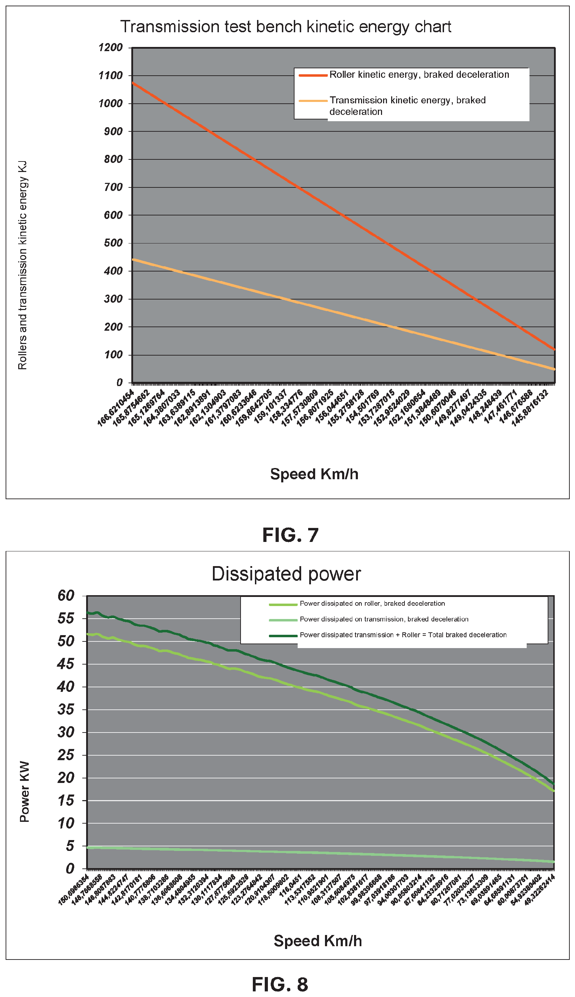

**Figure 7** is similar to **Figure 1****,** but in this case relates to the forced-deceleration step (application of a braking torque to the rollers). This graph shows how the kinetic energy is dissipated more rapidly than during natural deceleration. The steeper slope of the curves confirms the effectiveness of the braking torque in modifying the dynamics of the system, an essential element for fully characterizing the interaction between the equipment and the vehicle.

**Figure 8** is similar to **Figure 4****,** but in this case relates to the forced-deceleration step (application of a braking torque to the rollers). It can be observed that the total dissipated power is significantly greater than during natural deceleration (about 55 kW versus 25 kW at maximum), highlighting the effectiveness of the method described above when it comes to generating differentiated test conditions that make it possible to isolate the characteristic parameters of the entire equipment+vehicle system.

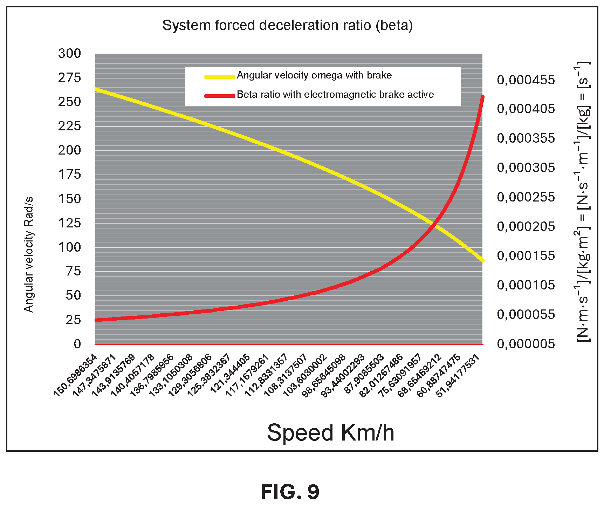

**Figure 9** is an analogue of **Figure 3** and shows the variation of the parameter β during forced deceleration. The significantly higher value of β (about 0.00045 s⁻¹, compared with 0.00014 s⁻¹ during natural deceleration) confirms that the application of the braking torque substantially modifies the dynamics of the overall system. The difference between these two values of β is precisely what makes it possible to precisely determine the total moment of inertia, as described in the present method.

A numerical example associated with the method just described is given below. This example implements the steps indicated above in order to derive the power associated with the engine of a particular vehicle under investigation.

### Introduction and methodology

The following analysis is based on an experimental approach that exploits the "cognitive symbiosis" between the roller bench and the vehicle under test. This method makes it possible to precisely determine the moment of inertia of the vehicle's transmission, a fundamental parameter for correctly evaluating the engine power, starting from two test steps:
- **Forced deceleration:** deceleration takes place with the application of a known braking torque;
- **Natural deceleration:** the vehicle decelerates naturally, with no application of external forces

### Known parameters of the system

- Moment of inertia of the test bench: 15.43 kg·m²
- Mass of one roller: 203 kg
- Roller diameter: 318 mm
- Roller rolling factor: 0.999026464
- Tyre rolling radius: 2.129060 metres
- Transmission ratio: 2.665:1

### Analysis of the test data

### Selection of the data

As required, the analysis focuses on data from a peripheral speed of 150 km/h downwards. The data are integrated every 4 revolutions of the roller, with the physical values present at the fourth position of each interval.

### Fundamental equations

For **natural deceleration,** the differential equation is: ${kω}^{2} = - I \frac{{d}_{ω}}{{d}_{t}} ⇔ τt = {Iω}_{f} - {Iω}_{i}$ which, when integrated, gives: $⇔ ω \left(t\right) = \frac{1}{\frac{kt}{I} + \frac{1}{{ω}_{0}}}$

For forced deceleration, the differential equation is: ${τ}_{o} + k {ω}^{2} = - I \frac{{d}_{ω}}{{d}_{t}}$ where:
- I is the total moment of inertia of the system
- ω is the angular velocity
- k is the aerodynamic resistance coefficient
- τo is the applied braking torque
- t is time

### Analysis of natural deceleration

### Selected data

Starting from the natural-deceleration test, the data are selected starting from 150 km/h:

| **Time (s)** | **Angular velocity (rad/s)** | **Angular acceleration (rad/s²)** | **Peripheral speed (km/h)** |
|---|---|---|---|
| 0.0247744 | 228.9745 | -9.7197 | 149.9101 |
| 0.0257396 | 216.8457 | -9.0503 | 141.9586 |
| 0.0268656 | 203.9139 | -8.9075 | 133.5381 |
| 0.0280308 | 191.6631 | -8.3812 | 125.5923 |
| 0.0293456 | 179.2133 | -8.0804 | 117.3909 |
| 0.0307980 | 166.2198 | -7.5664 | 108.8768 |
| 0.0326088 | 152.4331 | -6.9548 | 99.8373 |
| 0.0356544 | 138.0160 | -6.3142 | 90.4119 |

### Calculation of the ratio β = k/l

From the integrated formula, it is possible to rearrange the equation to isolate the ratio β = k/I: $β = \frac{k}{I} = \frac{1}{t} \left(\frac{1}{ω}-\frac{1}{{ω}_{0}}\right)$

By applying this equation to different pairs of points, the following are obtained:

| **Interval (s)** | **ω₀ (rad/s)** | **ω (rad/s)** | **β = k/I (1/s)** |
|---|---|---|---|
| 0.0257396-0.0247744 | 228.9745 | 216.8457 | 0.00025342 |
| 0.0268656-0.0257396 | 216.8457 | 203.9139 | 0.00026175 |
| 0.0280308-0.0268656 | 203.9139 | 191.6631 | 0.00025984 |
| 0.0293456-0.0280308 | 191.6631 | 179.2133 | 0.00026437 |
| 0.0307980-0.0293456 | 179.2133 | 166.2198 | 0.00026721 |

The average value of the ratio β is found to be 0.00026132 s⁻¹.

### Analysis of forced deceleration

### Selected data

From the forced-deceleration test, the following data are selected:

| **Time (s)** | **Angular velocity (rad/s)** | **Angular acceleration (rad/s²)** | **Torque (Nm)** | **Peripheral speed (km/h)** |
|---|---|---|---|---|
| 0.0430408 | 166.2198 | -12.6243 | 163.9828 | 149.8603 |
| 0.0470432 | 149.2956 | -12.8937 | 169.9641 | 134.6751 |
| 0.0516600 | 131.9131 | -13.0131 | 175.5530 | 118.9811 |
| 0.0569568 | 114.1913 | -12.7207 | 180.2775 | 103.0034 |
| 0.0631080 | 96.4925 | -12.6881 | 184.2448 | 87.0273 |

### Analysis of dynamic behaviour

By substituting β = k/I and defining τ₀ as the applied braking torque, the differential equation of forced deceleration becomes: ${τ}_{o} + {βIω}^{2} = - I \frac{{d}_{ω}}{{d}_{t}}$

By integrating this equation and solving it numerically, it is possible to determine the value of I that best fits the experimental data.

### Iterative determination of the total moment of inertia

Using the value of β calculated from natural deceleration (0.00026132 s⁻¹) and the data from forced deceleration, together with the average value of the braking torque, an iterative analysis is carried out to determine the value of I.

Solving the differential equation for different values of I leads to identifying the optimal value of 21.78 kg·m² for the total moment of inertia of the system.

### Calculation of the moment of inertia of the transmission

Knowing the total moment of inertia of the system (21.78 kg·m²) and the known moment of inertia of the bench (15.43 kg·m²), it is possible to calculate the moment of inertia of the transmission: $I_ \left(transmission\right) = I_ \left(total\right) - I_ \left(bench\right) = 21.78 - 15.43 = 6.35 kg ⋅ {m}^{2}$

### Parameters of the "Cognitive Symbiosis"

The methodology based on the "cognitive symbiosis" between the test bench and the vehicle defines six fundamental parameters that fully characterize the dynamic interaction between the two systems.

### Parameter ξ (Xi)

The ratio ξ (Xi) is defined as the ratio between the kinetic energy of the vehicle's transmission and the kinetic energy of the test bench: $≡ = \frac{\left(\frac{1}{2}∗{I}_{auto}∗{ω}_{transmissione}^{2}\right)}{\left(\frac{1}{2}∗{I}_{banco}∗{ω}_{banco}^{2}\right)}$

Using the rolling ratio between the 2 rotating systems, i.e. (0.47), derived from the data provided, the following is obtained: $Xi = 6.35 * {0.47}^{∧} 2 / 15.43 = 0.09090829552$

### Parameter β (Beta)

The parameter β, already calculated above, represents the mathematical relationship linking the total moment of inertia to the dissipative resistances: $β = k / I = 0.00026132 {s}^{∧} - 1$

### Parameter γ (Gamma)

The ratio γ (gamma) is defined as the ratio between the moment of inertia of the transmission and the moment of inertia of the bench: $γ = I_ \left(transmission\right) - I_ \left(bench\right) = 6.35 / 15.43 = 0.41153596889$

### Parameter ζ (Zeta)

The parameter ζ (zeta) is correlated to the ratio β and provides information on the overall efficiency of the transmission. From the data analysed, the approximate value of ζ is 0.85.

### Parameter η (Eta)

The ratio η (eta) represents the relationship between the mass of the test bench's rollers and their diameter: $η = mass_ \left(rollers\right) / diameter_ \left(rollers\right) = 203 kg / 0.318 m$

From the available data, η is found to be approximately 638.36477987 kg/m.

### Parameter ε (Epsilon)

The parameter ε (epsilon) quantifies the specific energy efficiency of the system: $ε = E kinetic_ \left(useful\right) / \left(E total_\left(total\right)*m_at \left(apparent translational mass\right)\right)$

From the data analysed, the approximate value of ε is **0.92.**

### Comparison between the model and the experimental data

Using the calculated value of the total moment of inertia (21.78 kg·m²) and the parameter β (0.00026132 s⁻¹), it is possible to simulate the dynamic behaviour of the system during forced and natural deceleration and to compare it with the experimental data.

### Natural deceleration - comparison between model and experimental data:

| **Time (s)** | **ω experimental (rad/s)** | **ω model (rad/s)** | **Error (%)** |
|---|---|---|---|
| 0.0247744 | 228.9745 | 229.1026 | 0.06 |
| 0.0257396 | 216.8457 | 217.0256 | 0.08 |
| 0.0268656 | 203.9139 | 204.1547 | 0.12 |
| 0.0280308 | 191.6631 | 191.8734 | 0.11 |
| 0.0293456 | 179.2133 | 179.4089 | 0.11 |

### Forced deceleration - comparison between model and experimental data:

| **Time (s)** | **ω experimental (rad/s)** | **ω model (rad/s)** | **Error (%)** |
|---|---|---|---|
| 0.0430408 | 166.2198 | 166.5322 | 0.19 |
| 0.0470432 | 149.2956 | 149.6723 | 0.25 |
| 0.0516600 | 131.9131 | 132.2489 | 0.26 |
| 0.0569568 | 114.1913 | 114.4803 | 0.25 |
| 0.0631080 | 96.4925 | 96.7321 | 0.25 |

The good agreement between the experimental data and the model confirms the accuracy of the calculated parameters.

The analysis of the natural- and forced-deceleration data has made it possible to precisely determine the moment of inertia of the vehicle's transmission, equal to 6.35 kg·m², and to fully characterize the dynamic interaction between the test bench and the vehicle by means of the six parameters of the "cognitive symbiosis".

This methodological approach overcomes the limitations of traditional methods, which often resort to arbitrary correction coefficients to compensate for the unknown represented by the inertia of the transmission. The direct determination of this fundamental parameter allows an accurate evaluation of the mechanical power generated by the engine, eliminating the approximations that compromise the accuracy of conventional methodologies.

The parameters calculated by means of the present example are given below:
- Moment of inertia of the transmission: 6.35 kg·m²
- Ratio ξ (Xi): 0.09
- Ratio β (Beta): average 0.00026132 s⁻¹
- Ratio γ (Gamma): 0.41
- Ratio ζ (Zeta): 0.85
- Ratio η (Eta): 638.36477987 kg/m.
- Ratio ε (Epsilon): 0.92

These parameters define the "dynamic cognitive symbiosis" of the integrated bench-vehicle system, making it possible to achieve a scientifically rigorous determination of the mechanical power generated by the engine under any operating condition.

### Comparison between Σ (Xi) and ε (Epsilon)

Although both parameters relate to the kinetic energy in the integrated bench-vehicle system, they have different meanings and functions:

### ξ (Xi) - ratio between kinetic energies

The parameter Xi is defined as the ratio between the kinetic energy of the vehicle's transmission and the kinetic energy of the test bench: $≡ = \frac{\left(\frac{1}{2}∗{I}_{auto}∗{ω}_{transmissione}^{2}\right)}{\left(\frac{1}{2}∗{I}_{banco}∗{ω}_{banco}^{2}\right)}$

This is a direct ratio between two rotational kinetic energies, which quantifies how much the kinetic energy of the transmission affects the total kinetic energy of the system during the acceleration and deceleration phases.

### ε (Epsilon) - specific energy efficiency

The Epsilon parameter, on the other hand, relates the useful energy to the total energy, taking into account the apparent translational mass: $ε = \frac{{E}_{utile}}{mat ∗ {E}_{Totale}}$

Epsilon focuses on the efficiency of converting energy into useful work, taking into account the apparent translational mass.

### Fundamental differences

Suitably, Xi compares two rotational kinetic energies, whereas Epsilon relates the useful energy to the total energy. Furthermore, Xi is dimensionless (Joule/Joule), whereas Epsilon has dimensions of [1/mass], since it includes m_at in the denominator.

Xi indicates the distribution of kinetic energy between the transmission and the bench (i.e. the rollers), whereas Epsilon quantifies the efficiency of energy conversion, taking into account the apparent translational mass. Finally, the parameter Xi is fundamental for understanding the energy interaction between the two systems, whereas the parameter Epsilon completes the picture by characterizing the dynamic efficiency of the entire system.

The present invention may be embodied in other variants, all of which fall within the scope of the inventive features claimed and described; such technical features may be replaced by various technically equivalent elements, as may the materials used; the shapes and dimensions of the invention may be any whatsoever, provided that they are compatible with its use.

The numbers and reference signs included in the claims and in the description are intended solely to increase the clarity of the text and must not be regarded as elements limiting the technical interpretation of the objects or processes identified by them.

## Claims

1. A method for detecting the mechanical power generated by an engine of a vehicle, wherein the vehicle is equipped with an engine, a transmission and at least one pair of driving wheels operatively connected to the transmission, such transmission having an intrinsic moment of inertia and mechanical resistance, the method comprising the following steps
a) preparation of at least one roller suited to come into contact with a respective driving wheel of the vehicle, each roller being suited to selectively rotate around its central axis as the result of the rotation of the vehicle wheels;
b) preparation of braking means to selectively apply a braking torque to said at least one roller;
c) positioning of the wheels of the vehicle in contact with said at least one roller;
d) driving of the engine of the vehicle to promote the rotation of the wheels placed on said at least one roller and the consequent acceleration of said at least one roller, such driving step being suited to bring the engine to a predetermined operation mode suited to impart respective angular reference rotation speeds to the wheels and said at least one roller;
e) release of the engine of the vehicle to remove the rotational torque imparted by the engine to the wheels;
f) actuation of said braking means to promote the application of a braking torque having a predetermined value to said at least one roller;
g) deceleration of said at least one roller; said deceleration being forced as a result of the application of said braking torque to said at least one roller and remaining applied for a first predetermined reference time;
h) detection of the angular velocity associated with at least one roller at said first reference time;
i) calculation of the ratio between the constant associated with the dissipative resistances of the assembly comprising at least the vehicle and said at least one roller and the moment of inertia of the assembly comprising at least the vehicle and said at least one roller; said ratio being calculated from the value of the angular velocity associated with the rollers in said step d) and in said step h);
j) deactivation of said braking means;
k) further execution of said step d) and of said step e);
l) natural deceleration of said at least one roller; said natural deceleration remaining applied for a second predetermined reference time;
m)detection of the angular velocity associated with said at least one roller at said second reference time;
n) calculation of the moment of inertia of the assembly comprising at least the vehicle and said at least one roller, said moment of inertia being calculated from the value of the angular rotation speed associated with said at least one roller in said step d), from the value of the angular rotation speed associated with said at least one roller in said step m) and from the value of the ratio calculated in said step i);
o) calculation of the dissipative resistances of the assembly comprising at least the vehicle and said at least one roller, said dissipative resistances being calculated from the value of said moment of inertia of the assembly calculated in said step m);
p) calculation of the mechanical power delivered by the vehicle engine to the wheels, said power being calculated as a function of the value of said moment of inertia calculated in said step n) and the value of said dissipative resistances calculated in said step o).

2. Method according to claim 1, **characterized in that** it comprises a step q) of preparation of sensor means associated with said at least one roller, said sensor means being suited to detect the rotation time of each roller when the wheels are set in motion by the engine.

3. Method according to one or more of the preceding claims , **characterized in that** it comprises a step r) of preparation of an electronic processing unit operatively associated with said braking means and said sensors and suited to calculate at least the braking torque applied to said at least one roller at said step f) and the angular velocity associated with said at least one roller at said steps d), h) and m).

4. Method according to one or more of the preceding claims, **characterized in that** said first predetermined time and said second predetermined time are equal to each other.

5. Method according to one or more of the preceding claims, **characterized in that** said first predetermined time and said second predetermined time are different from each other.

6. Method according to one or more of the preceding claims, **characterized in that** said steps k) to m) are executed recursively for a predetermined number of times prior to the execution of said step n) of calculating the moment of inertia.

7. A method according to claim 6, **characterized in that** said electronic processing unit is suited to calculate an average value of the associated angular speed based on the repetition of said step m), said moment of inertia being calculated in said step n) from the value of the angular speed associated with at least one roller in said step d), from the average value of the angular speed associated with at least one roller calculated by said electronic processing unit following the repetition of said step m), and from the value of the ratio calculated in said step i).

8. A method according to one or more of the preceding claims, **characterised in that** in said step i) the ratio of the constant associated with the dissipative resistances of the assembly comprising at least the vehicle and said at least one roller to the moment of inertia of the assembly comprising at least the vehicle and said at least one roller is calculated as follows: $\frac{k}{I} = \frac{1}{t} \left(\frac{1}{ω}-\frac{1}{{ω}_{0}}\right)$ in which:
k is the constant associated with the dissipative resistances of the assembly consisting of at least the vehicle and said at least one roller;
I is the moment of inertia of the assembly consisting of at least the vehicle and said at least one roller;
t is the first predetermined time;
ω and ω₀ are the angular speeds associated with the roller respectively in step d) and step h).

9. A method according to one or more of the preceding claims, **characterized in that** at step n) the moment of inertia of the assembly comprising at least the vehicle and said at least one roller is calculated according to the following formula: $arctan \left(\sqrt{\frac{k}{{τ}_{o}}}\right) - arctan \left({ω}_{o}\sqrt{\frac{k}{{τ}_{o}}}\right) = \frac{t \sqrt{{kτ}_{o}}}{I}$ in which:
k is the constant associated with the dissipative resistances of the assembly consisting of at least the vehicle and said at least one roller;
I is the moment of inertia of the assembly consisting of at least the vehicle and said at least one roller;
τₒ is the value of the braking torque generated by the braking means and applied to the rollers in said phase j).
